# EUROPEAN PATENT APPLICATION

(11) **EP 4 841 399 A1**
(43) Date of publication of application: **18.11.2026**
(21) Application number: 25762328.0
(22) Date of filing: 13.02.2025
(51) Int. Cl.: G06F 3/01, G06F 1/16, G06V 40/18, G06F 3/00

(54) **WEARABLE DEVICE, METHOD, AND NON-TRANSITORY COMPUTER-READABLE RECORDING MEDIUM FOR GAZE TRACKING ON BASIS OF PERSONAL CHARACTERISTICS**

(30) Priority: 29.02.2024 KR 20240030332; 16.04.2024 KR 20240050877
(71) Applicant: Samsung Electronics Co., Ltd., Suwon-si, Gyeonggi-do 16677 (KR)
(72) Inventor: KANG, Jinmo, Suwon-si, Gyeonggi-do 16677 (KR); KIM, Kihwan, Suwon-si, Gyeonggi-do 16677 (KR); KIM, Harksang, Suwon-si, Gyeonggi-do 16677 (KR); KIM, Beomsu, Suwon-si, Gyeonggi-do 16677 (KR); KIM, Sungoh, Suwon-si, Gyeonggi-do 16677 (KR); KIM, Jihyun, Suwon-si, Gyeonggi-do 16677 (KR); AHN, Sunggeun, Suwon-si, Gyeonggi-do 16677 (KR); YEOM, Donghyun, Suwon-si, Gyeonggi-do 16677 (KR); LEE, Sanghun, Suwon-si, Gyeonggi-do 16677 (KR); JUNG, Sunyoung, Suwon-si, Gyeonggi-do 16677 (KR); CHOI, Minsheok, Suwon-si, Gyeonggi-do 16677 (KR); CHOI, Sungsoo, Suwon-si, Gyeonggi-do 16677 (KR); LEE, Gunhee, Suwon-si, Gyeonggi-do 16677 (KR)
(74) Representative: Nederlandsch Octrooibureau
(86) International application number: PCT/KR2025/002161
(87) International publication number: WO 2025/183394

(57) **Abstract**

A wearable device is disclosed. The wearable device may comprise a display arranged to face the eyes of a user wearing the wearable device. The wearable device may comprise a camera configured to acquire an image of at least a portion of the eyes of the user wearing the wearable device. The wearable device may, on the basis of the image acquired by the camera, identify whether slippage of the wearable device has occurred while tracking the gaze of the user viewing a screen displayed through the display. The wearable device may correct the user's gaze by using a correction value identified on the basis of user characteristics associated with the user's head shape, in response to the slippage being identified.

## Description

### [Technical Field]

The following descriptions relate to a wearable device, a method, and a non-transitory computer readable storage medium for gaze tracking based on personal characteristics.

### [Background Art]

In order to provide an enhanced user experience, an electronic device providing an augmented reality (AR) service that displays computer-generated information in association with an external object in the real-world is being developed. The electronic device may be a wearable device wearable by a user. For example, the electronic device may be AR glasses and/or a head-mounted device (HMD).

The wearable device may track movement of a pupil of an eye of a user and/or a gaze of the user based on an image of the eye. The wearable device may determine what the user is looking at or what the user is focusing on through gaze tracking.

### [Disclosure]

### [Technical Solution]

A wearable device is disclosed. The wearable device may comprise a display arranged to face an eye of a user wearing the wearable device. The wearable device may comprise a camera configured to obtain an image of at least a portion of the eye of the user wearing the wearable device. The wearable device may comprise at least one processor comprising processing circuitry. The wearable device may comprise memory storing instructions and comprising one or more storage media. The instructions, when executed by the at least one processor individually or collectively, may cause the wearable device to, while tracking a gaze of the user looking at a screen displayed through the display, based on the image obtained by the camera, identify whether slippage of the wearable device occurs. The instructions, when executed by the at least one processor individually or collectively, may cause the wearable device to, based on that the slippage is identified, correct the gaze using a correction value identified based on user characteristics related to a head shape of the user.

A method is disclosed. The method may be executed by a wearable device comprising a display arranged to face an eye of a user wearing the wearable device, and a camera configured to obtain an image of at least a portion of the eye of the user wearing the wearable device. The method may comprise, while tracking a gaze of the user with respect to a screen displayed through the display, based on the image obtained by the camera, identifying whether slippage of the wearable device occurs. The method may comprise, based on the slippage being identified as having occurred, correcting the gaze using a correction value identified based on user characteristics of the user.

A non-transitory computer readable storage medium is disclosed. The non-transitory computer readable storage medium may store one or more programs including instructions. The instructions, when executed individually or collectively by at least one processor of a wearable device comprising a display arranged to face an eye of a user wearing the wearable device, and a camera configured to obtain an image of at least a portion of the eye of the user wearing the wearable device, may cause the wearable device to, while tracking a gaze of the user with respect to a screen displayed through the display, based on the image obtained by the camera, identify whether slippage of the wearable device occurs. The instructions, when executed by the at least one processor individually or collectively, may cause the wearable device to, based on the slippage being identified as having occurred, correct the gaze using a correction value identified based on user characteristics of the user.

### [Description of the Drawings]

FIG. 1 is a block diagram of an electronic device in a network environment according to various embodiments.
FIG. 2A illustrates an example of an exterior of a wearable device according to an embodiment.
FIG. 2B illustrates an example of an exterior of a wearable device according to an embodiment.
FIG. 3A illustrates a positional relationship between displays and two eyes of a user determined through fit adjustment.
FIG. 3B illustrates an example of an image of a left eye of a user.
FIG. 3C illustrates an anatomical structure of a left eye of a user.
FIG. 3D illustrates an example of slippage of a left eye of a user.
FIG. 4A illustrates a synthetic image generated according to a slippage state.
FIG. 4B illustrates a synthetic image generated according to a slippage state.
FIG. 5 illustrates an example of user calibration for obtaining reference images.
FIG. 6 is a block diagram of an electronic device according to an embodiment.
FIG. 7 is a diagram illustrating an example of an operation in which an electronic device corrects a gaze error according to an embodiment.
FIG. 8 is a diagram illustrating an example of an operation in which an electronic device corrects a gaze error according to an embodiment.
FIG. 9 is a flowchart illustrating an operation of an electronic device according to an embodiment.
FIG. 10 is a flowchart illustrating an operation of an electronic device according to an embodiment.

### [Mode for Invention]

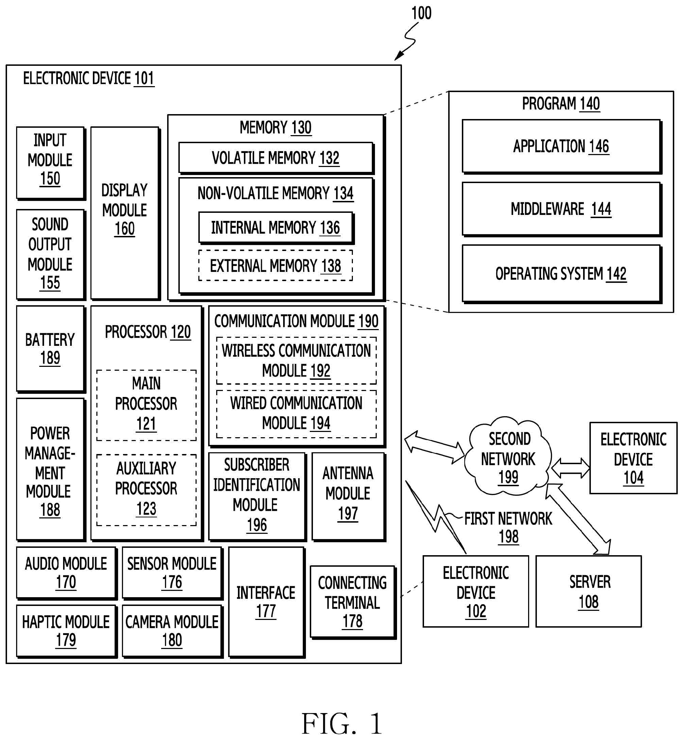

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

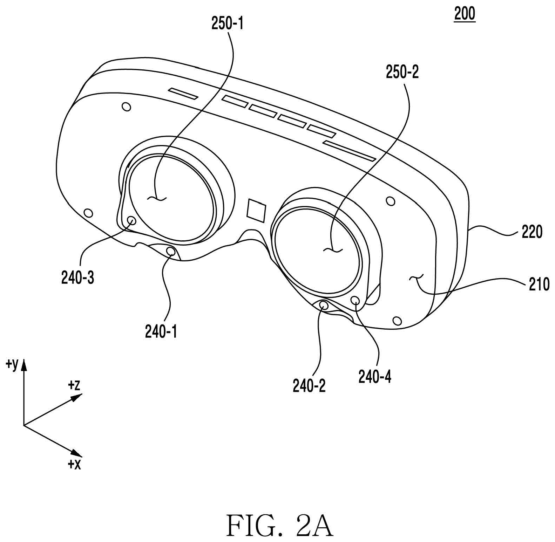

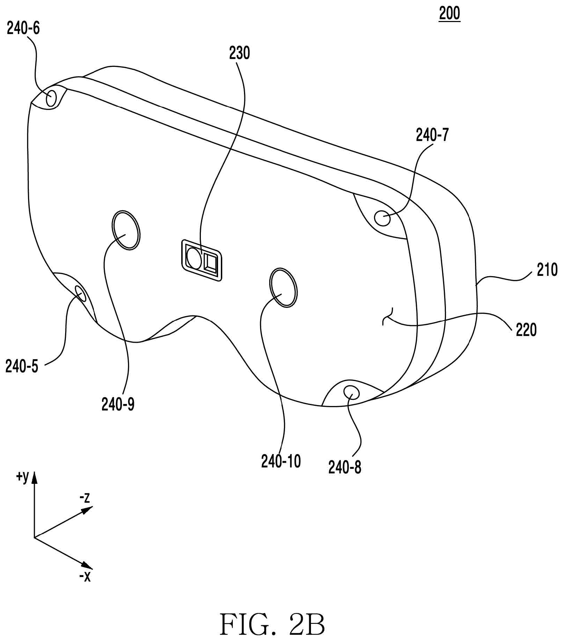

FIG. 2A illustrates an example of an exterior of a wearable device according to an embodiment. FIG. 2B illustrates an example of an exterior of a wearable device according to an embodiment.

A wearable device 200 of FIG. 2A to FIG. 2B may correspond to the electronic device 101 of FIG. 1.

Referring to FIG. 2A, according to an embodiment, a first surface 210 of the wearable device 200 may have a form attachable onto a body part of a user (e.g., a face of the user). According to an embodiment, the wearable device 200 may have a form factor to be worn on a head of the user. In an embodiment, the wearable device 200 may be worn on a part (e.g., the head) of the user's body. In an embodiment, the wearable device 200 may be referred to as a wearable device in terms of being worn on a part (e.g., the head) of the user's body. Although not illustrated, the wearable device 200 may further include a strap and/or one or more temples for being secured on a body part of the user.

According to an embodiment, the wearable device 200 may include a first display 250-1 and a second display 250-2. For example, the first display 250-1 and the second display 250-2 may be disposed at positions corresponding to a left eye and a right eye of the user, respectively. According to an embodiment, the wearable device 200 may further include a rubber or silicone packing formed on the first surface 210, for preventing or reducing interference caused by light (e.g., ambient light) different from light emitted from the first display 250-1 and the second display 250-2.

In an embodiment, the wearable device 200 may provide augmented reality (AR), virtual reality (VR), or mixed reality (MR), which is a combination of AR and VR, to a user wearing the wearable device 200 through the displays 250-1 and 250-2. For example, the wearable device 200 may provide the user with a user experience (e.g., video see-through (VST)) in which a real object and a reference object are combined by integrating the reference object within a frame that includes the real object and is displayed through the first display 250-1 and the second display 250-2.

According to an embodiment, the wearable device 200 may include the first display 250-1 and/or the second display 250-2 spaced apart from the first display 250-1. For example, the first display 250-1 and the second display 250-2 may be disposed at positions corresponding to the left eye and the right eye of the user, respectively.

According to an embodiment, the wearable device 200 may include cameras 240-1 and 240-2 for capturing and/or recognizing the face of the user. The cameras 240-1 and 240-2 may be referred to as face tracking (FT) cameras.

According to an embodiment, the wearable device 200 may include cameras 240-3 and 240-4 for capturing and/or tracking two eyes of the user adjacent to the first display 250-1 and the second display 250-2, respectively. The cameras 240-3 and 240-4 may be referred to as eye tracking (ET) cameras.

The cameras 240-3 and 240-4 may output data (or an image) indicating a gaze of the user wearing the wearable device 200. For example, the wearable device 200 may detect the gaze of the user from an image including an eyeball of the user obtained through the cameras 240-3 and 240-4. In an embodiment, the data (or the image) indicating the gaze may include an image of the user's eye. In an embodiment, the data (or the image) indicating the gaze may include an image of a pupil and an iris of the user's eye.

The wearable device 200 may identify a position of a pupil and/or an iris of the user based on an image indicating light reflected from the iris of the user obtained through the ET cameras 240-3 and 240-4. The wearable device 200 may identify a gaze and/or movement of the gaze of the user based on the position and/or a change in the position of the pupil and/or the iris of the user. Although not illustrated, according to an embodiment, the wearable device 200 may further include a light source (e.g., a light emitting diode (LED)) that emits light toward a subject (e.g., an eye and/or a face of the user, and/or an external object within an FoV) captured using the ET cameras 240-3 and 240-4. The light source may emit light of an infrared wavelength.

The displays 250-1 and 250-2 described with reference to FIG. 2A may correspond to the display module 160 of FIG. 1. The cameras 240-1, 240-2, 240-3, and 240-4 described with reference to FIG. 2A may correspond to the camera module 180 of FIG. 1. However, it is not limited thereto. Some of the cameras 240-1, 240-2, 240-3, and 240-4 described with reference to FIG. 2A (e.g., the cameras 240-3 and 240-4) may correspond to the sensor module 176 of FIG. 1.

Referring to FIG. 2B, cameras 240-5, 240-6, 240-7, 240-8, 240-9, and 240-10 and/or a depth sensor 230 for obtaining information related to an external environment of the wearable device 200 may be disposed on a second surface 220 opposite to the first surface 210 of FIG. 2A. For example, the cameras 240-5, 240-6, 240-7, 240-8, 240-9, and 240-10 may be disposed on the second surface 220 to recognize an external object different from the wearable device 200. The cameras 240-5, 240-6, 240-7, 240-8, 240-9, and 240-10 described with reference to FIG. 2B may correspond to the camera module 180 of FIG. 1. The depth sensor 230 described with reference to FIG. 2B may correspond to the sensor module 176 of FIG. 1.

For example, using the cameras 240-9 and 240-10, the wearable device 200 may obtain an image and/or a video to be transmitted to each of two eyes of the user. The camera 240-9 may be disposed on the second surface 220 of the wearable device 200 to obtain an image to be displayed through the second display 250-2 corresponding to the right eye among the two eyes. The camera 240-10 may be disposed on the second surface 220 of the wearable device 200 to obtain an image to be displayed through the first display 250-1 corresponding to the left eye among the two eyes.

According to an embodiment, the wearable device 200 may include the depth sensor 230 disposed on the second surface 220 to identify a distance between the wearable device 200 and an external object. Using the depth sensor 230, the wearable device 200 may obtain spatial information (e.g., a depth map) regarding at least a portion of a field of view (FoV) of the user wearing the wearable device 200.

According to an embodiment, the wearable device 200 may include at least one of a gyro sensor, a gravity sensor, and/or an acceleration sensor to detect a posture of the wearable device 200 and/or a posture of a body part (e.g., a head) of the user wearing the wearable device 200. Each of the gravity sensor and the acceleration sensor may measure gravitational acceleration and/or acceleration based on specified three-dimensional axes (e.g., an x-axis, a y-axis, and a z-axis) perpendicular to each other. The gyro sensor may measure an angular velocity of each of specified three-dimensional axes (e.g., the x-axis, the y-axis, and the z-axis). At least one of the gravity sensor, the acceleration sensor, and the gyro sensor may be referred to as an inertial measurement unit (IMU). According to an embodiment, the wearable device 200 may identify a motion and/or a gesture of the user performed to execute or stop a specific function of the wearable device 200 based on the IMU. In an embodiment, the IMU may correspond to the sensor module 176 of FIG. 1.

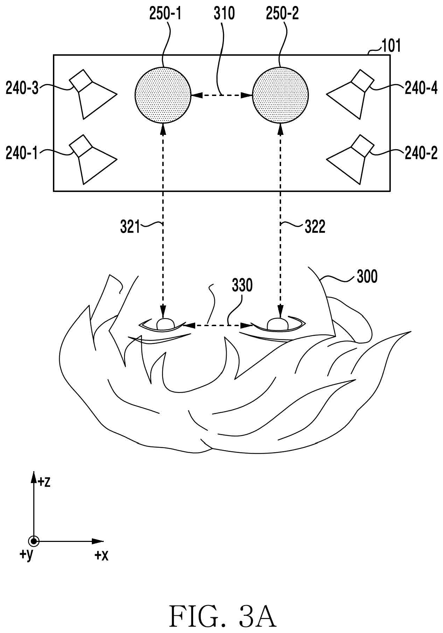

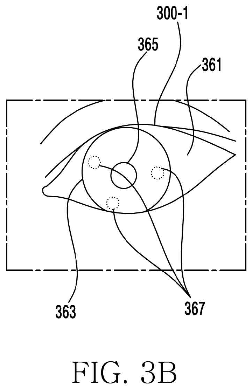

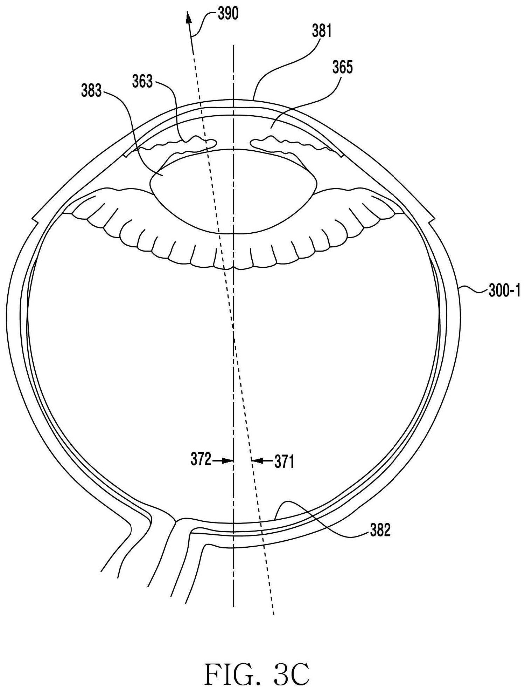

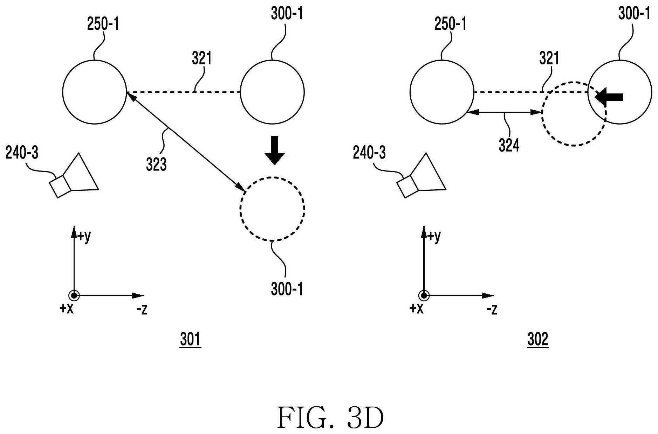

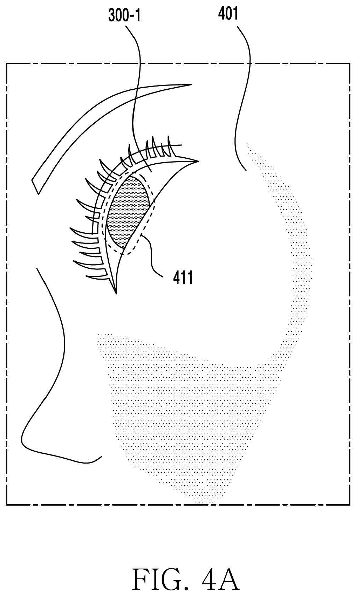

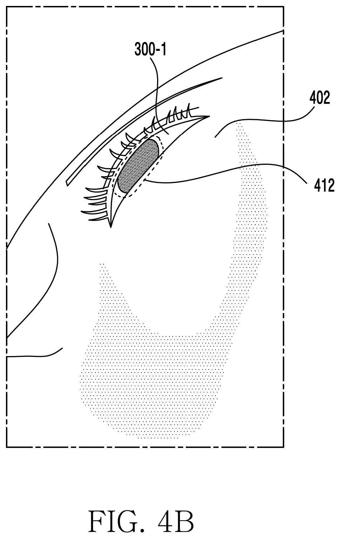

FIG. 3A illustrates a positional relationship between displays 250-1 and 250-2 and two eyes 300-1 and 300-2 of a user determined through fit adjustment. FIG. 3B illustrates an example of an image of a left eye 300-1 of a user 300. FIG. 3C illustrates an anatomical structure of a left eye 300-1 of a user 300. FIG. 3D illustrates an example of slippage of a left eye 300-1 of a user 300. FIG. 4A illustrates a synthetic image generated according to a slippage state. FIG. 4B illustrates a synthetic image generated according to a slippage state.

FIG. 3A, FIG. 3B, FIG. 3C, FIG. 3D, FIG. 4A, and FIG. 4B may be described with reference to the electronic device 101 of FIG. 1, and the wearable device 200 of FIG. 2A and FIG. 2B. Operations described with reference to FIG. 3A, FIG. 3B, FIG. 3C, FIG. 3D, FIG. 4A, and FIG. 4B may be executed by the electronic device 101 and/or a processor 120 of the electronic device 101.

In an embodiment, the electronic device 101 may obtain feature information of the user 300. In an embodiment, the electronic device 101 may obtain the feature information of the user 300 based on an image obtained from cameras 240-1, 240-2, 240-3, and 240-4.

In an embodiment, the feature information may include information on feature parts of a head of the user 300. In an embodiment, the feature parts of the head may include parts on which the electronic device 101 is worn by the user 300. For example, the feature parts of the head may include two eyes 300-1 and 300-2, and/or peripheral parts (e.g., a nose and/or cheeks) of the two eyes 300-1 and 300-2. However, it is not limited thereto. The feature parts of the head may include other parts (e.g., a forehead, temples, or cheekbones) of the head of the user 300 that affect slippage of the electronic device 101.

In an embodiment, the feature information may include a positional relationship between the displays 250-1 and 250-2 and the two eyes 300-1 and 300-2 of the user 300. Referring to FIG. 3A, the positional relationship may include information on a first distance 310 between the displays 250-1 and 250-2, information on a second distance 321 between the first display 250-1 and the left eye 300-1, information on a third distance 322 between the second display 250-2 and the right eye 300-2, and information on a fourth distance 330 between the two eyes 300-1 and 300-2. Hereinafter, the second distance 321 and the third distance 322 may be referred to as eye relief. The information on the second distance 321 and the information on the third distance 322 may be referred to as eye relief information. The fourth distance 330 may be referred to as an interpupillary distance (IPD). The information on the fourth distance 330 may be referred to as IPD information.

In an embodiment, the feature information may include position information of feature parts of the two eyes 300-1 and 300-2 of the user 300. In an embodiment, referring to FIG. 3B, the feature parts may include a sclera 361, an iris 363, a pupil 365, and/or a glint 367 resulting from reflection by a light source. In FIG. 3B, only the left eye 300-1 is illustrated, but this is merely an example. Feature parts of the right eye 300-2 may also include a sclera, an iris, a pupil, and/or a glint resulting from reflection by a light source.

In an embodiment, the electronic device 101 may obtain the eye relief information and the IPD information based on an image obtained from the cameras 240-1, 240-2, 240-3, and 240-4. In an embodiment, the electronic device 101 may obtain position information of the displays 250-1 and 250-2 based on a sensor (e.g., an IMU).

In an embodiment, the feature information may include position information of peripheral parts (e.g., the nose and/or the cheeks) of the two eyes 300-1 and 300-2 of the user 300. In an embodiment, the position information of the nose and/or the cheeks may include information on a size and/or a height of the nose and/or the cheeks.

In an embodiment, the electronic device 101 may obtain the position information of the peripheral parts (e.g., the nose and/or the cheeks) of the two eyes 300-1 and 300-2 based on an image obtained from the cameras 240-1, 240-2, 240-3, and 240-4.

In an embodiment, the electronic device 101 may obtain the feature information of the user 300 during fit adjustment. Herein, the fit adjustment may include position adjustment of the displays 250-1 and 250-2, distance adjustment between the displays 250-1 and 250-2, distance adjustment between the displays 250-1 and 250-2 and the two eyes 300-1 and 300-2, and/or securing the electronic device 101 on the head.

In an embodiment, the electronic device 101 may generate an eye model based on the feature information. In an embodiment, the electronic device 101 may generate the eye model including one or more parameters. Referring to FIG. 3C, the one or more parameters may indicate a radius of curvature of a cornea 381 of each of the two eyes 300-1 and 300-2, and a difference in angle (or a kappa angle) between a visual axis 371 and an optical axis 372. The visual axis 371 may be a straight line passing through a center of a lens 383 from a fovea 382. The optical axis 372 may be a straight line passing through the pupil 365 from a center of rotation of each of the two eyes 300-1 and 300-2. The visual axis 371 is inclined from the optical axis 372 by approximately 5 degrees in a horizontal inward direction and by approximately 1 degree in a vertical downward direction with respect to a direction of a center of the pupil 365. The one or more parameters may indicate a position of each of the two eyes 300-1 and 300-2, a radius of each of the two eyes 300-1 and 300-2, a size of the iris 363, a radius of the iris 363, a radius of the pupil 365, a center position of the pupil 365, and a position of at least one glint 367. In an embodiment, a gaze direction 390 of the user 300 may correspond to a direction of the visual axis 371. In an embodiment, tracking a gaze of the user 300 may include obtaining the gaze direction 390 of the user 300. However, it is not limited thereto.

In an embodiment, the electronic device 101 may identify a head model corresponding to the feature information of the user 300 and/or a gender of the user 300 among a plurality of head models. In an embodiment, the plurality of head models may have different shapes according to shapes of feature parts of a head and/or a gender. In an embodiment, the electronic device 101 may identify a head model corresponding to information of the two eyes 300-1 and 300-2, the nose, the cheeks, and/or the forehead of the user 300.

In an embodiment, the electronic device 101 may generate one or more synthetic images for the head model corresponding to the user 300. In an embodiment, the one or more synthetic images may indicate virtual images of the two eyes 300-1 and 300-2 of the user 300 obtained from the cameras 240-3 and 240-4 in different slippage states. In an embodiment, the one or more synthetic images may indicate virtual images of the two eyes 300-1 and 300-2 of the user 300 obtained from the cameras 240-3 and 240-4 based on a structure of the electronic device 101, a position of a light source, positions of the cameras 240-1, 240-2, 240-3, and 240-4, and/or positions of the displays 250-1 and 250-2.

For example, slippage may indicate a situation in which a wearing state of the electronic device 101 is changed according to relative movement between the electronic device 101 and the user 300 through fit adjustment. For example, a slippage state 301 of FIG. 3D may indicate a state in which the left eye 300-1 is moved relatively downward with respect to the first display 250-1 according to relative movement between the electronic device 101 and the left eye 300-1 of the user 300. In the slippage state 301, the eye relief may be changed from the second distance 321 to another distance 323. In the slippage state 301, an image of the left eye 300-1 captured through the camera 240-3 (hereinafter, a slippage image) may be different from an image of the left eye 300-1 captured in a wearing state according to fit adjustment (hereinafter, a normal wearing image). For example, the slippage image may indicate a state in which the left eye 300-1 is captured from above compared to the normal wearing image. For example, a slippage state 302 of FIG. 3D may indicate a state in which the first display 250-1 and the left eye 300-1 are relatively closer to each other according to relative movement between the electronic device 101 and the left eye 300-1 of the user 300. In the slippage state 302, the eye relief may be changed from the second distance 321 to another distance 324. In the slippage state 302, a slippage image of the left eye 300-1 captured through the camera 240-3 may be different from a normal wearing image of the left eye 300-1 captured in the wearing state according to fit adjustment. For example, the slippage image may indicate a state in which the left eye 300-1 is captured in a more magnified state compared to the normal wearing image. According to an embodiment, the slippage image may indicate a state in which the left eye 300-1 is captured from below compared to the normal wearing image. The slippage image may indicate a state in which the left eye 300-1 is captured in a reduced state compared to the normal wearing image.

In an embodiment, the one or more synthetic images may indicate virtual images of the two eyes 300-1 and 300-2 obtained from the cameras 240-3 and 240-4 within each specified slippage range. For example, the one or more synthetic images may indicate virtual images of the two eyes 300-1 and 300-2 when each of the two eyes 300-1 and 300-2 is in a state of a downward direction, an upward direction, an approaching direction, a moving-away direction, or a combination thereof relative to the electronic device 101. For example, the one or more synthetic images may indicate a virtual image in each of slippage states according to a degree of movement in a vertical direction (e.g., a downward direction and an upward direction) and a degree of movement in a horizontal direction (e.g., an approaching direction and a moving-away direction). The degree of movement in the vertical direction and the degree of movement in the horizontal direction may be defined within a specified slippage range. In an embodiment, the specified slippage range may be determined by the head model corresponding to the user 300 among the plurality of head models. However, it is not limited thereto. For example, the slippage range may be determined according to the head model of the user 300 and/or adjustment of a portion of the electronic device 101 worn on the user 300. For example, the portion worn on the user 300 may include a forehead pad, a light seal for preventing (or reducing) external light from reaching the two eyes 300-1 and 300-2 of the user 300, eyeglass temples (e.g., temples), and/or a headband of the electronic device 101.

In an embodiment, the one or more synthetic images may indicate virtual images of the two eyes 300-1 and 300-2 when the user 300 looks at an object displayed through the displays 250-1 and 250-2 through the two eyes 300-1 and 300-2 in each specified slippage range.

For example, referring to FIG. 4A, a synthetic image 401 may indicate a state in which the left eye 300-1 is captured from below compared to the normal wearing image. For example, a synthetic image 402 may indicate a state in which the left eye 300-1 is captured from further below compared to the synthetic image 401.

Referring to the synthetic images 401 and 402, it may be confirmed that regions 411 and 412 of the iris are changed according to a slippage state. Accordingly, updating of the eye model according to the slippage state may be required.

In an embodiment, the electronic device 101 may determine a correction value of the eye model according to slippage. In an embodiment, the electronic device 101 may determine a correction value of one or more parameters of the eye model according to slippage. For example, the electronic device 101 may determine a correction value of the one or more parameters of the eye model based on a position of each of the two eyes 300-1 and 300-2, a radius of each of the two eyes 300-1 and 300-2, a size of the iris 363, a radius of the iris 363, a radius of the pupil 365, a center position of the pupil 365, and a position of at least one glint 367 identified in each of the synthetic images. For example, the electronic device 101 may determine a correction value for the visual axis 371 of the eye model based on a position of each of the two eyes 300-1 and 300-2, a radius of each of the two eyes 300-1 and 300-2, a size of the iris 363, a radius of the iris 363, a radius of the pupil 365, a center position of the pupil 365, and a position of at least one glint 367 identified in each of the synthetic images.

According to an embodiment, the electronic device 101 may determine a correction value for the visual axis 371 obtained through the eye model according to slippage. The electronic device 101 may determine the correction value for the visual axis 371 obtained through an uncorrected eye model instead of correcting the eye model. Hereinafter, the correction value of the eye model may be referred to as an eye model variation value. Hereinafter, the correction value for the visual axis 371 obtained through the uncorrected eye model may be referred to as a gaze error correction value.

In an embodiment, the electronic device 101 may obtain eye model variation values and/or gaze error correction values for each of slippage states based on the synthetic images.

According to an embodiment, the electronic device 101 may obtain actual images to be used as the one or more synthetic images. For example, the electronic device 101 may guide the user 300 to a slippage state (e.g., guidance through a graphical user interface (GUI) or an auditory user interface (AUI)). For example, the electronic device 101 may obtain actual images through the cameras 240-3 and 240-4 in each of slippage states according to a degree of movement in a relative vertical direction and a degree of movement in a relative horizontal direction between the electronic device 101 and the user 300 by manipulation of the user 300 according to the guidance. In an embodiment, the degree of movement in the relative vertical direction and the degree of movement in the relative horizontal direction between the electronic device 101 and the user 300 by manipulation of the user 300 according to the guidance may be identified based on an image obtained from the cameras 240-1, 240-2, 240-3, and 240-4, and/or a sensor (e.g., an IMU).

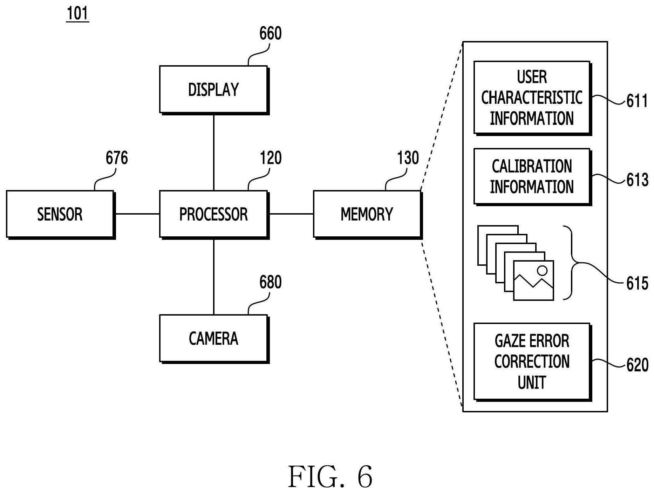

In an embodiment, the one or more synthetic images, the correction value (e.g., an eye model variation value and/or a gaze error correction value) for each of the synthetic images, the feature information, and the head model may be included in user characteristic information. In an embodiment, the user characteristic information may be used for correcting an error in a gaze of the user 300 in the electronic device 101. Correction of the error in the gaze of the user 300 may be described with reference to FIG. 6 to FIG. 8.

According to an embodiment, the electronic device 101 may obtain the user characteristic information (e.g., a correction value) based on an artificial intelligence (AI) model (e.g., a machine learning model). According to an embodiment, the electronic device 101 may obtain a correction value (e.g., an eye model variation value and/or a gaze error correction value) for each of slippage degrees within a slippage range through the AI model. For example, the AI model may be trained to output user characteristic information based on actual images through the cameras 240-3 and 240-4 in each of slippage states according to a degree of movement in a relative vertical direction and a degree of movement in a relative horizontal direction. In an embodiment, the AI model may include a pre-trained AI model. In an embodiment, the AI model may include a plurality of parameters related to a neural network having a structure based on an encoder and a decoder, such as a transformer. However, it is not limited thereto. In an embodiment, the AI model may include parameters for driving a neural network such as a convolutional neural network (CNN), a recurrent neural network (RNN), a feedforward neural network (FNN), and/or a long short-term memory (LSTM).

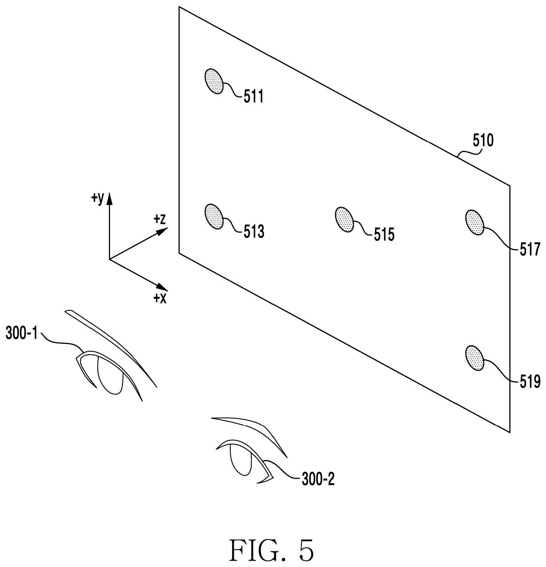

FIG. 5 illustrates an example of user calibration for obtaining reference images.

FIG. 5 may be described with reference to the electronic device 101 of FIG. 1, and the wearable device 200 of FIG. 2A and FIG. 2B. FIG. 5 may be described with reference to FIG. 3A, FIG. 3B, FIG. 3C, FIG. 3D, FIG. 4A, and FIG. 4B. Operations described with reference to FIG. 5 may be executed by the electronic device 101 and/or a processor 120 of the electronic device 101.

In an embodiment, the electronic device 101 may perform calibration for correcting data indicating a gaze of a user 300 by reflecting feature information of the user 300. Referring to FIG. 5, the electronic device 101 may display, on a screen 510, virtual reference objects 511, 513, 515, 517, and 519 whose locations (coordinates) are known, in a state in which the user 300 is wearing the electronic device 101. The electronic device 101 may correct a difference in an angle (or a kappa angle) between a visual axis 371 and an optical axis 372 of the user 300, positions of two eyes 300-1 and 300-2, and a gaze direction (or the visual axis 371) through the two eyes 300-1 and 300-2 while the user 300 is looking at the reference objects 511, 513, 515, 517, and 519. In an embodiment, the electronic device 101 may sequentially display the reference objects 511, 513, 515, 517, and 519 on the screen 510 for calibration.

In an embodiment, the electronic device 101 may obtain reference images while performing calibration. In an embodiment, the reference images may be images of the two eyes 300-1 and 300-2 when looking at each of the reference objects 511, 513, 515, 517, and 519 obtained through cameras 240-1, 240-2, 240-3, and 240-4.

According to an embodiment, the electronic device 101 may generate, as reference images, images of the two eyes 300-1 and 300-2 when looking at a location on the screen 510 other than the reference objects 511, 513, 515, 517, and 519 based on the reference images obtained while performing calibration.

In an embodiment, the reference images may be used to correct an error in the gaze of the user 300 in the electronic device 101. Correction of the error in the gaze of the user 300 may be described with reference to FIG. 6 to FIG. 8.

FIG. 6 is a block diagram of an electronic device 101 according to an embodiment.

FIG. 6 may be described with reference to the electronic device 101 of FIG. 1, and the wearable device 200 of FIG. 2A and FIG. 2B. Operations described with reference to FIG. 6 may be executed by the electronic device 101 and/or a processor 120 of the electronic device 101.

Referring to FIG. 6, the electronic device 101 may include the processor 120, memory 130, a display 660, a sensor 676, and a camera 680. In an embodiment, the processor 120 of FIG. 6 may correspond to the processor 120 of FIG. 1. In an embodiment, the memory 130 of FIG. 6 may correspond to the memory 130 of FIG. 1. In an embodiment, the display 660 of FIG. 6 may correspond to the display module 160 of FIG. 1. In an embodiment, the display 660 of FIG. 6 may correspond to the displays 250-1 and 250-2 of FIG. 2A, FIG. 2B, and FIG. 3A. In an embodiment, the sensor 676 of FIG. 6 may correspond to the sensor module 176 of FIG. 1. In an embodiment, the sensor 676 of FIG. 6 may be an IMU. In an embodiment, the camera 680 of FIG. 6 may correspond to the camera module 180 of FIG. 1. In an embodiment, the camera 680 of FIG. 6 may correspond to the cameras 240-1, 240-2, 240-3, and 240-4 of FIG. 2A, FIG. 2B, and FIG. 3A.

In an embodiment, the memory 130 may include user characteristic information 611, calibration information 613, reference images 615, and a gaze error correction unit 620. In an embodiment, the user characteristic information 611 may include one or more synthetic images, feature information, and information on a head model. In an embodiment, the calibration information 613 may indicate a value for correcting a difference in an angle (or a kappa angle) between a visual axis 371 and an optical axis 372 of a user 300, positions of two eyes 300-1 and 300-2, and a gaze direction (or the visual axis 371) through the two eyes 300-1 and 300-2.

In an embodiment, the gaze error correction unit 620 may identify a gaze of the user 300 (or a gaze based on the visual axis 371) based on an image of the two eyes 300-1 and 300-2 obtained through the camera 680.

In an embodiment, the gaze error correction unit 620 may identify occurrence of slippage of the electronic device 101 through the sensor 676 and/or the camera 680. For example, the gaze error correction unit 620 may identify, through the sensor 676 and/or the camera 680, that the electronic device 101 has relatively moved from the user 300. For example, the gaze error correction unit 620 may identify the occurrence of slippage of the electronic device 101 based on a change in the gaze (or the visual axis 371) (or a vector indicating the visual axis 371) of the user 300 looking at an object, the gaze being identified through the camera 680. For example, the gaze error correction unit 620 may identify the occurrence of slippage based on two gazes of the user 300 looking at an object displayed at a specified location on a screen 510, the two gazes being obtained at different time points. For example, based on a first gaze (or the visual axis 371) (or a vector indicating the visual axis 371) at a first time point and a second gaze (or the visual axis 371) (or a vector indicating the visual axis 371) at a second time point of the user 300 looking at an object displayed at the same location being different from each other, it may be identified that the slippage has occurred. In an embodiment, the first gaze (or the visual axis 371) (or the vector indicating the visual axis 371) at the first time point may be obtained based on displaying objects during calibration. In an embodiment, the second gaze (or the visual axis 371) (or the vector indicating the visual axis 371) at the second time point may be obtained while the electronic device 101 provides augmented reality (AR), virtual reality (VR), or mixed reality (MR) to the user 300.

In an embodiment, the gaze error correction unit 620 may correct the gaze of the user 300 (or the gaze based on the visual axis 371) based on the occurrence of slippage of the electronic device 101. In an embodiment, the gaze error correction unit 620 may correct the gaze of the user 300 (or the gaze based on the visual axis 371) using the user characteristic information 611 and the reference images 615 based on the occurrence of slippage of the electronic device 101. Correcting the gaze of the user 300 (or the gaze based on the visual axis 371) may include correcting parameters of an eye model based on an eye model variation value. Correcting the gaze of the user 300 (or the gaze based on the visual axis 371) may include correcting the visual axis 371 obtained through an uncorrected eye model based on a gaze error correction value.

According to an embodiment, the gaze error correction unit 620 may include an AI model. In an embodiment, the gaze error correction unit 620 may correct a gaze of the user 300 (or a gaze based on the visual axis 371) based on the AI model. For example, the AI model of the gaze error correction unit 620 may be trained to output an eye model variation value, a gaze error correction value, or information on a corrected gaze based on actual images obtained in each of slippage states according to a degree of movement in a relative vertical direction and a degree of movement in a relative horizontal direction. In an embodiment, the AI model may include a pre-trained AI model. In an embodiment, the AI model may include a plurality of parameters related to a neural network having a structure based on an encoder and a decoder, such as a transformer. However, it is not limited thereto. In an embodiment, the AI model may include parameters for driving a neural network such as a CNN, an RNN, an FNN, and/or an LSTM.

In an embodiment, the gaze error correction unit 620 may obtain an eye model variation value or a gaze error correction value by inputting an image into the AI model. In an embodiment, the gaze error correction unit 620 may correct a gaze based on the obtained model variation value or gaze error correction value. In an embodiment, the gaze error correction unit 620 may obtain information on a corrected gaze by inputting an image into the AI model.

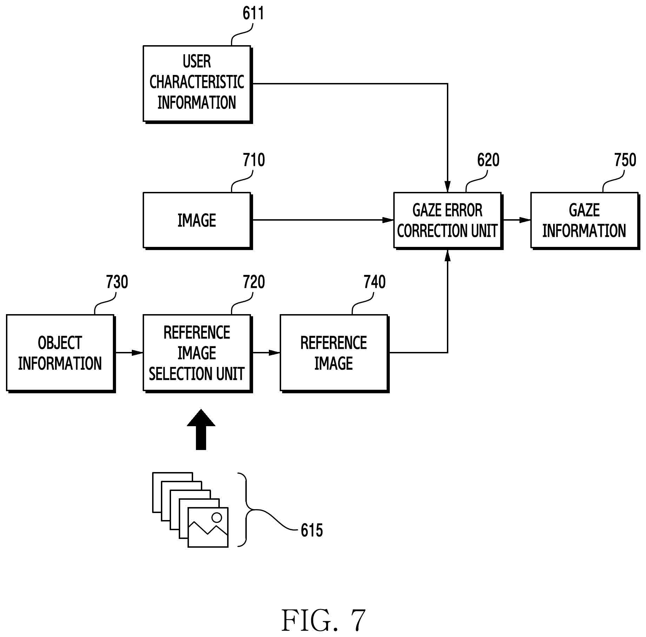

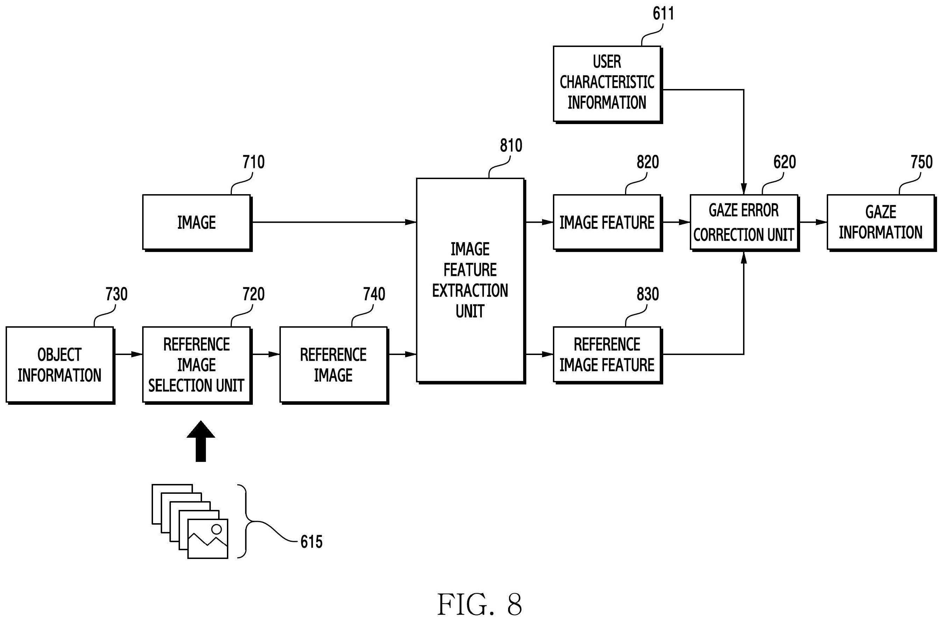

Hereinafter, an operation in which the electronic device 101 corrects a gaze of the user 300 (or a gaze based on the visual axis 371) will be described with reference to FIG. 7 and FIG. 8.

As described above, the electronic device 101 may correct an error in a gaze according to a degree of slippage occurring based on a head shape of the user 300. Accordingly, the electronic device 101 may provide a more sophisticated gaze tracking function to the user 300.

FIG. 7 illustrates an example of an operation in which an electronic device 101 corrects a gaze error according to an embodiment.

FIG. 7 may be described with reference to the electronic device 101 of FIG. 1 and FIG. 6, and the wearable device 200 of FIG. 2A and FIG. 2B. Operations described with reference to FIG. 7 may be executed by the electronic device 101 and/or a processor 120 of the electronic device 101.

Referring to FIG. 7, the electronic device 101 may obtain an image 710 of two eyes 300-1 and 300-2 obtained through a camera 680.

In an embodiment, the electronic device 101 may obtain object information 730 regarding an object on a screen 510 displayed through a display 660 at a time point (or a time interval) of obtaining the image 710. In an embodiment, the object information 730 may indicate a position of the object in a three dimensional (3D) space. However, it is not limited thereto. In an embodiment, the object information 730 may indicate a location in a two dimensional (2D) space displayed through the display 660 for gaze tracking.

In an embodiment, the electronic device 101 may identify at least one reference image 740 among reference images 615 through a reference image selection unit 720. For example, the electronic device 101 may identify the reference image 740 corresponding to the object information 730 among the reference images 615. In an embodiment, the reference image 740 corresponding to the object information 730 may include a location at which an object is displayed when the reference image 740 is obtained and a location of an object on the screen 510 displayed through the display 660 when the image 710 is obtained corresponding to each other.

In an embodiment, the reference image selection unit 720 may be included as a portion of a gaze error correction unit 620. However, it is not limited thereto. The reference image selection unit 720 may be stored in memory 130 as a module separate from the gaze error correction unit 620.

In an embodiment, the electronic device 101 may determine whether slippage occurs through comparison between the image 710 and the reference image 740. In an embodiment, the electronic device 101 may determine whether slippage occurs by comparing a gaze (or a visual axis 371) (or a vector indicating the visual axis 371) identified from the image 710 with a reference gaze (or a reference visual axis) (or a reference vector indicating the reference visual axis) of the reference image 740. For example, the electronic device 101 may determine that slippage has occurred based on identifying that a difference between the gaze identified from the image 710 and the reference gaze is greater than or equal to a reference difference.

In an embodiment, the electronic device 101 may obtain gaze information 750 from the image 710 through the gaze error correction unit 620. For example, the gaze information 750 may indicate the gaze (or the visual axis 371) (or a vector indicating the visual axis 371) or a corrected gaze (or the visual axis 371) (or a vector indicating the visual axis 371) of a user 300.

In an embodiment, the electronic device 101 may obtain, through the gaze error correction unit 620, the gaze information 750 in a state in which correction for the gaze (or the visual axis 371) (or the vector indicating the visual axis 371) of the user 300 is not performed, based on determining that slippage has not occurred.

In an embodiment, the electronic device 101 may obtain the gaze information 750 in a state in which correction for the gaze (or the visual axis 371) (or the vector indicating the visual axis 371) of the user 300 is performed, based on determining that slippage has occurred.

In an embodiment, based on determining that slippage has occurred, the electronic device 101 may identify a synthetic image corresponding to the image 710 based on user characteristic information 611. In an embodiment, the electronic device 101 may identify a synthetic image corresponding to a degree of slippage appearing in the image 710. In an embodiment, the electronic device 101 may identify an eye model variation value for parameters of the eye model and/or a gaze error correction value for the visual axis 371 corresponding to the identified synthetic image.

In an embodiment, the electronic device 101 may correct an eye model based on the eye model variation value. In an embodiment, the electronic device 101 may obtain, as the gaze information 750, the corrected gaze (or the visual axis 371) (or the vector indicating the visual axis 371) of the user 300 based on the corrected eye model.

In an embodiment, the electronic device 101 may identify the gaze (or the visual axis 371) (or the vector indicating the visual axis 371) of the user 300 obtained through an uncorrected eye model. In an embodiment, the electronic device 101 may obtain, as the gaze information 750, the corrected gaze (or the visual axis 371) (or the vector indicating the visual axis 371) of the user 300 by correcting the gaze (or the visual axis 371) (or the vector indicating the visual axis 371) of the user 300 based on the gaze error correction value.

According to an embodiment, the gaze error correction unit 620 may correct the gaze of the user 300 (or the gaze based on the visual axis 371) based on an AI model. In an embodiment, the gaze error correction unit 620 may obtain an eye model variation value or a gaze error correction value by inputting an image into the AI model. In an embodiment, the gaze error correction unit 620 may obtain the corrected gaze as the gaze information 750 based on the obtained model variation value or gaze error correction value. In an embodiment, the gaze error correction unit 620 may obtain the gaze information 750 on the corrected gaze by inputting an image into the AI model.

According to an embodiment, the AI model of the gaze error correction unit 620 may be trained to determine whether slippage occurs. The AI model of the gaze error correction unit 620 may be trained to output an eye model variation value, a gaze error correction value, or the gaze information 750 on the corrected gaze when it is determined that slippage has occurred.

FIG. 8 illustrates an example of an operation in which an electronic device 101 corrects a gaze error according to an embodiment.

FIG. 8 may be described with reference to the electronic device 101 of FIG. 1, FIG. 6, and FIG. 7, and the wearable device 200 of FIG. 2A and FIG. 2B. Operations described with reference to FIG. 8 may be executed by the electronic device 101 and/or a processor 120 of the electronic device 101.

Compared with FIG. 7, FIG. 8 may represent an operation in which the electronic device 101 obtains gaze information 750 based on image features 820 and 830 obtained from images 710 and 740,.

Referring to FIG. 8, the electronic device 101 may obtain an image 710 of two eyes 300-1 and 300-2 obtained through a camera 680.

In an embodiment, the electronic device 101 may identify at least one reference image 740 among reference images 615 through a reference image selection unit 720. For example, the electronic device 101 may identify the reference image 740 corresponding to object information 730 among the reference images 615.

In an embodiment, the electronic device 101 may extract the image features 820 and 830 of the image 710 and the reference image 740, respectively, through an image feature extraction unit 810. The image features 820 and 830 may indicate feature points of feature parts of the two eyes 300-1 and 300-2. In an embodiment, the feature points may be feature points extracted based on edges of the feature parts. For example, the feature points may be obtained by performing ellipse fitting on the edges. In an embodiment, the image feature extraction unit 810 may be included as a portion of a gaze error correction unit 620. However, it is not limited thereto. The image feature extraction unit 810 may be stored in memory 130 as a module separate from the gaze error correction unit 620.

In an embodiment, the electronic device 101 may determine whether slippage occurs through comparison between the image feature 820 of the image 710 and a reference image feature 830 of the reference image 740. In an embodiment, the electronic device 101 may determine whether slippage occurs by comparing positions of feature points included in the image feature 820 with reference positions of reference feature points included in the reference image feature 820. For example, the electronic device 101 may determine that slippage has occurred based on identifying that a difference between the positions of the feature points and the reference positions of the reference feature points is greater than or equal to a reference difference.

In an embodiment, the electronic device 101 may obtain gaze information 750 from the image feature 820 of the image 710 through the gaze error correction unit 620.

In an embodiment, the electronic device 101 may obtain, through the gaze error correction unit 620, the gaze information 750 in a state in which correction for a gaze (or a visual axis 371) (or a vector indicating the visual axis 371) of a user 300 is not performed, based on determining that slippage has not occurred.

In an embodiment, the electronic device 101 may obtain the gaze information 750 in a state in which correction for the gaze (or the visual axis 371) (or the vector indicating the visual axis 371) of the user 300 is performed, based on determining that slippage has occurred.

In an embodiment, based on determining that slippage has occurred, the electronic device 101 may identify a synthetic image corresponding to the image feature 820 of the image 710 based on user characteristic information 611. In an embodiment, the electronic device 101 may identify an eye model variation value for parameters of an eye model and/or a gaze error correction value for the visual axis 371 corresponding to the identified synthetic image.

In an embodiment, the electronic device 101 may correct an eye model based on the eye model variation value. In an embodiment, the electronic device 101 may obtain, as the gaze information 750, a corrected gaze (or a visual axis 371) (or a vector indicating the visual axis 371) of the user 300 based on the corrected eye model.

In an embodiment, the electronic device 101 may identify the gaze (or the visual axis 371) (or the vector indicating the visual axis 371) of the user 300 obtained through an uncorrected eye model. In an embodiment, the electronic device 101 may obtain, as the gaze information 750, the corrected gaze (or the visual axis 371) (or the vector indicating the visual axis 371) of the user 300 by correcting the gaze (or the visual axis 371) (or the vector indicating the visual axis 371) of the user 300 based on the gaze error correction value.

According to an embodiment, the gaze error correction unit 620 may correct the gaze of the user 300 (or the gaze based on the visual axis 371) based on an AI model. In an embodiment, the gaze error correction unit 620 may obtain an eye model variation value or a gaze error correction value by inputting an image into the AI model. In an embodiment, the gaze error correction unit 620 may obtain the corrected gaze as the gaze information 750 based on the obtained model variation value or gaze error correction value. In an embodiment, the gaze error correction unit 620 may obtain the gaze information 750 on the corrected gaze by inputting an image into the AI model.

According to an embodiment, the AI model of the gaze error correction unit 620 may be trained to determine whether slippage occurs. The AI model of the gaze error correction unit 620 may be trained to output an eye model variation value, a gaze error correction value, or the gaze information 750 on the corrected gaze when it is determined that slippage has occurred.

According to an embodiment, the image feature extraction unit 810 may include an AI model. The AI model of the image feature extraction unit 810 may be trained to extract image features from an image. The image feature extraction unit 810 may obtain the image features 820 and 830 from the images 710 and 740 through the AI model.

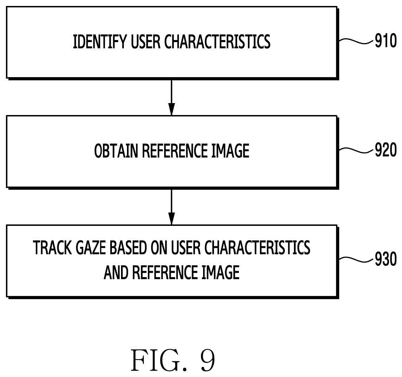

FIG. 9 is a flowchart illustrating an operation of an electronic device 101, according to an embodiment.

FIG. 9 may be described with reference to the electronic device 101 of FIG. 1, FIG. 6, FIG. 7, and FIG. 8, and the wearable device 200 of FIG. 2A and FIG. 2B. Operations described with reference to FIG. 9 may be executed by the electronic device 101 and/or a processor 120 of the electronic device 101.

Referring to FIG. 9, in operation 910, the electronic device 101 may identify user characteristics (e.g., one or more synthetic images, a correction value for each of the synthetic images (e.g., an eye model variation value and/or a gaze error correction value), feature information, and a head model). In an embodiment, the electronic device 101 may obtain the user characteristics of a user 300 during fit adjustment.

In operation 920, the electronic device 101 may obtain a reference image. In an embodiment, the electronic device 101 may obtain a plurality of reference images while performing calibration. In an embodiment, the reference images may be actual images of two eyes 300-1 and 300-2 when looking at each of reference objects 511, 513, 515, 517, and 519 obtained through cameras 240-1, 240-2, 240-3, and 240-4.

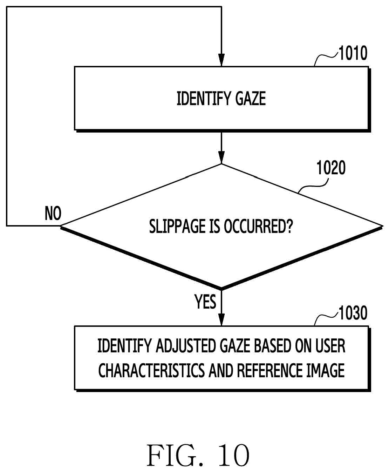

In operation 930, the electronic device 101 may perform gaze tracking based on the user characteristics and the reference image. In an embodiment, the gaze tracking may be described with reference to FIG. 10.

FIG. 10 is a flowchart illustrating an operation of an electronic device 101, according to an embodiment.

FIG. 10 may be described with reference to the electronic device 101 of FIG. 1, FIG. 6, FIG. 7, and FIG. 8, and the wearable device 200 of FIG. 2A and FIG. 2B. Operations described with reference to FIG. 10 may be executed by the electronic device 101 and/or a processor 120 of the electronic device 101. Operations 1010, 1020, and 1030 of FIG. 10 may be included in operation 930 of FIG. 9.

Referring to FIG. 10, in operation 1010, the electronic device 101 may identify a gaze. The electronic device 101 may identify a gaze of a user 300 (or a gaze based on a visual axis 371) based on an image 710 of two eyes 300-1 and 300-2 obtained through a camera 680.

In operation 1020, the electronic device 101 may determine whether slippage has occurred. In an embodiment, the electronic device 101 may identify occurrence of slippage of the electronic device 101 through a sensor 676 and/or the camera 680. For example, the electronic device 101 may identify, through the sensor 676 and/or the camera 680, that the electronic device 101 has relatively moved from the user 300. For example, the electronic device 101 may identify the occurrence of slippage of the electronic device 101 based on a change in the gaze (or the visual axis 371) (or a vector indicating the visual axis 371) of the user 300 looking at an object, the gaze being identified through the camera 680. For example, the electronic device 101 may identify the occurrence of slippage based on two gazes of the user 300 looking at an object displayed at a specified location on a screen 510, the two gazes being obtained at different time points. For example, based on a first gaze (or the visual axis 371) (or a vector indicating the visual axis 371) at a first time point and a second gaze (or the visual axis 371) (or a vector indicating the visual axis 371) at a second time point of the user 300 looking at an object displayed at the same location being different from each other, it may be identified that the slippage has occurred. In an embodiment, the first gaze (or the visual axis 371) (or the vector indicating the visual axis 371) at the first time point may be obtained based on displaying objects during calibration. In an embodiment, the second gaze (or the visual axis 371) (or the vector indicating the visual axis 371) at the second time point may be obtained while the electronic device 101 provides augmented reality (AR), virtual reality (VR), or mixed reality (MR) to the user 300.

In operation 1020, based on determining that slippage has occurred, the electronic device 101 may perform operation 1030. In operation 1020, based on determining that slippage has not occurred, the electronic device 101 may perform operation 1010.

In operation 1030, the electronic device 101 may identify an adjusted gaze based on user characteristics and a reference image.

In an embodiment, based on determining that slippage has occurred, the electronic device 101 may identify a synthetic image corresponding to the image 710 based on user characteristic information 611. In an embodiment, the electronic device 101 may identify a synthetic image corresponding to a degree of slippage appearing in the image 710. In an embodiment, the electronic device 101 may identify an eye model variation value for parameters of an eye model and/or a gaze error correction value for the visual axis 371 corresponding to the identified synthetic image.

In an embodiment, the electronic device 101 may correct the eye model based on the eye model variation value. In an embodiment, the electronic device 101 may obtain, as gaze information 750, a corrected gaze (or the visual axis 371) (or a vector indicating the visual axis 371) of the user 300 based on the corrected eye model.

In an embodiment, the electronic device 101 may identify a gaze (or the visual axis 371) (or a vector indicating the visual axis 371) of the user 300 obtained through an uncorrected eye model. In an embodiment, the electronic device 101 may obtain, as the gaze information 750, the corrected gaze (or the visual axis 371) (or the vector indicating the visual axis 371) of the user 300 by correcting the gaze (or the visual axis 371) (or the vector indicating the visual axis 371) of the user 300 based on the gaze error correction value.

As described above, a wearable device 101 may comprise a display 250-1, 250-2, or 660 arranged to face an eye 300-1 or 300-2 of a user 300 wearing the wearable device 101. The wearable device 101 may comprise a camera 240-1, 240-2, 240-3, 240-4, or 680 configured to obtain an image 710 of at least a portion of the eye 300-1 or 300-2 of the user 300 wearing the wearable device 101. The wearable device 101 may comprise at least one processor 120 comprising processing circuitry. The wearable device 101 may comprise memory 130 storing instructions and comprising one or more storage media. The instructions, when executed by the at least one processor 120 individually or collectively, may cause the wearable device 101 to, while tracking a gaze of the user 300 looking at a screen 510 displayed through the display 250-1, 250-2, or 660, based on the image 710 obtained by the camera 240-1, 240-2, 240-3, 240-4, or 680, identify whether slippage of the wearable device 101 occurs. The instructions, when executed by the at least one processor 120 individually or collectively, may cause the wearable device 101 to, based on that the slippage is identified, correct the gaze using a correction value identified based on user 300 characteristics related to a head shape of the user 300.

The instructions, when executed by the at least one processor 120 individually or collectively, may cause the wearable device 101 to, based on that the slippage is identified, identify the correction value regarding a synthetic image corresponding to an eye relief of the image 710 among a plurality of synthetic images generated at each of slippage degrees within a specified slippage range of the user 300.

The instructions, when executed by the at least one processor 120 individually or collectively, may cause the wearable device 101 to identify a head model corresponding to position information of feature parts of a head of the user 300 among a plurality of head models, based on another image 710 of at least a portion of a face of the user 300 wearing the wearable device 101 obtained during fit adjustment of the wearable device 101. The instructions, when executed by the at least one processor 120 individually or collectively, may cause the wearable device 101 to determine the slippage range corresponding to the identified head model.

The instructions, when executed by the at least one processor 120 individually or collectively, may cause the wearable device 101 to identify the eye relief between the display 250-1, 250-2, or 660 and the eye 300-1 or 300-2 of the user 300 wearing the wearable device 101, based on the image 710 obtained during fit adjustment of the wearable device 101. The instructions, when executed by the at least one processor 120 individually or collectively, may cause the wearable device 101 to determine the slippage range corresponding to the identified eye relief.

The plurality of synthetic images may be virtual images of the at least a portion of the eye 300-1 or 300-2 of the user 300 expected to be obtained through the camera 240-1, 240-2, 240-3, 240-4, or 680 at each of the slippage degrees. For each of the plurality of synthetic images for the slippage degrees, the correction value may be set for correcting one or more parameters of an eye model of the user 300, or a vector indicating the gaze identified through the eye model of the user 300.

The instructions, when executed by the at least one processor 120 individually or collectively, may cause the wearable device 101 to correct one or more parameters of an eye model of the user 300 based on the correction value. The instructions, when executed by the at least one processor 120 individually or collectively, may cause the wearable device 101 to identify the gaze based on the eye model in which the one or more parameters are corrected.

The instructions, when executed by the at least one processor 120 individually or collectively, may cause the wearable device 101 to correct a vector indicating the gaze identified through the eye model of the user 300 based on the correction value. The instructions, when executed by the at least one processor 120 individually or collectively, may cause the wearable device 101 to identify the gaze based on the corrected vector.

The instructions, when executed by the at least one processor 120 individually or collectively, may cause the wearable device 101 to identify whether the slippage of the wearable device 101 occurs based on comparing the gaze with a reference gaze identified through a reference image 740 for at least a portion of the eye 300-1 or 300-2 of the user 300 obtained while displaying a reference object 511, 513, 515, 517, or 519 at the same location as an object on the screen 510 toward which the gaze of the user 300 is directed.

The instructions, when executed by the at least one processor 120 individually or collectively, may cause the wearable device 101 to identify whether the slippage of the wearable device 101 occurs based on comparing feature points of the image 710 and reference feature points of a reference image 740 for at least a portion of the eye 300-1 or 300-2 of the user 300 obtained while displaying a reference object 511, 513, 515, 517, or 519 at the same location as an object on the screen 510 toward which the gaze of the user 300 is directed.

As described above, a method may be executed by a wearable device 101 comprising a display 250-1, 250-2, or 660 arranged to face an eye 300-1 or 300-2 of a user 300 wearing the wearable device 101, and a camera 240-1, 240-2, 240-3, 240-4, or 680 configured to obtain an image 710 of at least a portion of the eye 300-1 or 300-2 of the user 300 wearing the wearable device 101. The method may comprise, while tracking a gaze of the user 300 with respect to a screen 510 displayed through the display 250-1, 250-2, or 660, based on the image 710 obtained by the camera 240-1, 240-2, 240-3, 240-4, or 680, identifying whether slippage of the wearable device 101 occurs. The method may comprise, based on the slippage being identified as having occurred, correcting the gaze using a correction value identified based on user 300 characteristics of the user 300.

Correcting the gaze may comprise, based on the slippage being identified as having occurred, identifying the correction value regarding a synthetic image corresponding to an eye relief of the image 710 among a plurality of synthetic images generated at each of slippage degrees within a specified slippage range of the user 300.

The method may comprise identifying a head model corresponding to position information of feature parts of a head of the user 300 among a plurality of head models, based on another image 710 of at least a portion of a face of the user 300 wearing the wearable device 101 obtained during fit adjustment of the wearable device 101. The method may comprise determining the slippage range corresponding to the identified head model.

The method may comprise identifying the eye relief between the display 250-1, 250-2, or 660 and the eye 300-1 or 300-2 of the user 300 wearing the wearable device 101, based on the image 710 obtained during fit adjustment of the wearable device 101. The method may comprise determining the slippage range corresponding to the identified eye relief.

The plurality of synthetic images may be virtual images of the at least a portion of the eye 300-1 or 300-2 of the user 300 expected to be obtained through the camera 240-1, 240-2, 240-3, 240-4, or 680 at each of the slippage degrees. For each of the plurality of synthetic images for the slippage degrees, the correction value may be set for correcting one or more parameters of an eye model of the user 300, or a vector indicating the gaze identified through the eye model of the user 300.

The method may comprise correcting one or more parameters of an eye model of the user 300 based on the correction value. The method may comprise identifying the gaze based on the eye model in which the one or more parameters are corrected.

The method may comprise correcting a vector indicating the gaze identified through the eye model of the user 300 based on the correction value. The method may comprise identifying the gaze based on the corrected vector.

The method may comprise identifying whether the slippage of the wearable device 101 occurs based on comparing the gaze with a reference gaze identified through a reference image 740 for at least a portion of the eye 300-1 or 300-2 of the user 300 obtained while displaying a reference object 511, 513, 515, 517, or 519 at the same location as an object on the screen 510 toward which the gaze of the user 300 is directed.

The method may comprise identifying whether the slippage of the wearable device 101 occurs based on comparing feature points of the image 710 and feature points of a reference image 740 for at least a portion of the eye 300-1 or 300-2 of the user 300 obtained while displaying a reference object 511, 513, 515, 517, or 519 at the same location as an object on the screen 510 toward which the gaze of the user 300 is directed.

As described above, a non-transitory computer readable storage medium may store one or more programs including instructions. The instructions, when executed individually or collectively by at least one processor 120 of a wearable device 101 comprising a display 250-1, 250-2, or 660 arranged to face an eye 300-1 or 300-2 of a user 300 wearing the wearable device 101, and a camera 240-1, 240-2, 240-3, 240-4, or 680 configured to obtain an image 710 of at least a portion of the eye 300-1 or 300-2 of the user 300 wearing the wearable device 101, may cause the wearable device 101 to, while tracking a gaze of the user 300 with respect to a screen 510 displayed through the display 250-1, 250-2, or 660, based on the image 710 obtained by the camera 240-1, 240-2, 240-3, 240-4, or 680, identify whether slippage of the wearable device 101 occurs. The instructions, when executed by the at least one processor 120 individually or collectively, may cause the wearable device 101 to, based on the slippage being identified as having occurred, correct the gaze using a correction value identified based on user 300 characteristics of the user 300.

The instructions, when executed by the at least one processor 120 individually or collectively, may cause the wearable device 101 to, based on the slippage being identified as having occurred, identify the correction value regarding a synthetic image corresponding to an eye relief of the image 710 among a plurality of synthetic images generated at each of slippage degrees within a specified slippage range of the user 300.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device, comprising:
a display (250-1, 250-2, 660) arranged to face an eye (300-1, 300-2) of a user (300) wearing the wearable device (101),
a camera (240-1, 240-2, 240-3, 240-4, 680) configured to obtain an image (710) of at least a portion of the eye (300-1, 300-2) of the user (300) wearing the wearable device (101),
at least one processor (120) comprising processing circuitry; and
memory (130) storing instructions and comprising one or more storage media,
wherein the instructions, when executed by the at least one processor (120) individually or collectively, cause the wearable device (101) to:
while tracking a gaze of the user (300) looking at a screen (510) displayed through the display (250-1, 250-2, 660), based on the image (710) obtained by the camera (240-1, 240-2, 240-3, 240-4, 680), identify whether slippage of the wearable device (101) occurs, and
based on that the slippage is identified, correct the gaze using a correction value identified based on user (300) characteristics related to a head shape of the user (300).

2. The wearable device of claim 1,
wherein the instructions, when executed by the at least one processor (120) individually or collectively, cause the wearable device (101) to:
based on that the slippage is identified, identify the correction value regarding a synthetic image corresponding to an eye relief of the image (710) among a plurality of synthetic images generated at each of slippage degrees within a specified slippage range of the user (300).

3. The wearable device of claim 1 or 2,
wherein the instructions, when executed by the at least one processor (120) individually or collectively, cause the wearable device (101) to:
based on another image (710) of at least a portion of a face of the user (300) wearing the wearable device (101) obtained during fit adjustment of the wearable device (101), identify a head model corresponding to position information of feature parts of a head of the user (300) among a plurality of head models, and
determine the slippage range corresponding to the identified head model.

4. The wearable device of any one of claims 1 to 3,
wherein the instructions, when executed by the at least one processor (120) individually or collectively, cause the wearable device (101) to:
based on the image (710) obtained during fit adjustment of the wearable device (101), identify the eye relief between the display (250-1, 250-2, 660) and the eye (300-1, 300-2) of the user (300) wearing the wearable device (101), and
determine the slippage range corresponding to the identified eye relief.

5. The wearable device of any one of claims 1 to 4,
wherein the plurality of synthetic images are virtual images of the at least a portion of the eye (300-1, 300-2) of the user (300) expected to be obtained through the camera (240-1, 240-2, 240-3, 240-4, 680) at each of the slippage degrees, and
wherein for each of the plurality of synthetic images for the slippage degrees, the correction value is set for correcting one or more parameters of an eye model of the user (300), or a vector indicating the gaze identified through the eye model of the user (300).

6. The wearable device of any one of claims 1 to 5,
wherein the instructions, when executed by the at least one processor (120) individually or collectively, cause the wearable device (101) to:
based on the correction value, correct one or more parameters of an eye model of the user (300), and
identify the gaze based on the eye model in which the one or more parameters are corrected.

7. The wearable device of any one of claims 1 to 6,
wherein the instructions, when executed by the at least one processor (120) individually or collectively, cause the wearable device (101) to:
based on the correction value, correct a vector indicating the gaze identified through the eye model of the user (300), and
identify the gaze based on the corrected vector.

8. The wearable device of any one of claims 1 to 7,
wherein the instructions, when executed by the at least one processor (120) individually or collectively, cause the wearable device (101) to:
based on comparing the gaze with a reference gaze identified through a reference image (740) for at least a portion of the eye (300-1, 300-2) of the user (300) obtained while displaying a reference object (511, 513, 515, 517, 519) at the same location as an object on the screen (510) toward which the gaze of the user (300) is directed, identify whether the slippage of the wearable device (101) occurs.

9. The wearable device of any one of claims 1 to 8,
wherein the instructions, when executed by the at least one processor (120) individually or collectively, cause the wearable device (101) to:
based on comparing feature points of the image (710) and reference feature points of a reference image (740) for at least a portion of the eye (300-1, 300-2) of the user (300) obtained while displaying a reference object (511, 513, 515, 517, 519) at the same location as an object on the screen (510) toward which the gaze of the user (300) is directed, identify whether the slippage of the wearable device (101) occurs.

10. A method executed by a wearable device (101) comprising a display (250-1, 250-2, 660) arranged to face an eye (300-1, 300-2) of a user (300) wearing the wearable device (101), and a camera (240-1, 240-2, 240-3, 240-4, 680) configured to obtain an image (710) of at least a portion of the eye (300-1, 300-2) of the user (300) wearing the wearable device (101), comprising:
while tracking a gaze of the user (300) with respect to a screen (510) displayed through the display (250-1, 250-2, 660), based on the image (710) obtained by the camera (240-1, 240-2, 240-3, 240-4, 680), identifying whether slippage of the wearable device (101) occurs, and
based on the slippage being identified as having occurred, correcting the gaze using a correction value identified based on user (300) characteristics of the user (300).

11. The method of claim 10, wherein correcting the gaze comprises
based on the slippage being identified as having occurred, identifying the correction value regarding a synthetic image corresponding to an eye relief of the image (710) among a plurality of synthetic images generated at each of slippage degrees within a specified slippage range of the user (300).

12. The method of claim 10 or 11, comprising:
based on another image (710) of at least a portion of a face of the user (300) wearing the wearable device (101) obtained during fit adjustment of the wearable device (101), identifying a head model corresponding to position information of feature parts of a head of the user (300) among a plurality of head models, and
determining the slippage range corresponding to the identified head model.

13. The method of any one of claims 10 to 12, comprising:
based on the image (710) obtained during fit adjustment of the wearable device (101), identifying the eye relief between the display (250-1, 250-2, 660) and the eye (300-1, 300-2) of the user (300) wearing the wearable device (101), and
determining the slippage range corresponding to the identified eye relief.

14. The method of any one of claims 10 to 13,
wherein the plurality of synthetic images are virtual images of the at least a portion of the eye (300-1, 300-2) of the user (300) expected to be obtained through the camera (240-1, 240-2, 240-3, 240-4, 680) at each of the slippage degrees, and
wherein for each of the plurality of synthetic images for the slippage degrees, the correction value is set for correcting one or more parameters of an eye model of the user (300), or a vector indicating the gaze identified through the eye model of the user (300).

15. A non-transitory computer readable storage medium,
storing one or more programs including instructions,
wherein the instructions are configured, when executed individually or collectively by at least one processor (120) of a wearable device (101) comprising a display (250-1, 250-2, 660) arranged to face an eye (300-1, 300-2) of a user (300) wearing the wearable device (101), and a camera (240-1, 240-2, 240-3, 240-4, 680) configured to obtain an image (710) of at least a portion of the eye (300-1, 300-2) of the user (300) wearing the wearable device (101), to cause the wearable device (101) to:
while tracking a gaze of the user (300) with respect to a screen (510) displayed through the display (250-1, 250-2, 660), based on the image (710) obtained by the camera (240-1, 240-2, 240-3, 240-4, 680), identify whether slippage of the wearable device (101) occurs, and
based on the slippage being identified as having occurred, correct the gaze using a correction value identified based on user (300) characteristics of the user (300).
